# DEMANDE DE BREVET EUROPEEN

(11) **EP 4 640 729 A1**
(43) Date de publication de la demande: **29.10.2025**
(21) Numéro de dépôt: 25171459.8
(22) Date de dépôt: 18.04.2025
(51) Int. Cl.: C08G 18/12, C08G 18/24, C08G 18/28, C08G 18/30, C08G 18/38, C08G 18/48, C08G 18/75, C08G 18/76, C08L 75/08, C09J 175/08

(54) **COMPOSITION RETICULABLE A L HUMIDITE**

(30) Priorité: 23.04.2024 FR 2404169
(71) Demandeur: Bostik SA, 92800 Puteaux (FR)
(72) Inventeur: SANZ, M. Federico, 60280 VENETTE (FR); CARON, Aurore, 60280 VENETTE (FR); NEIGE, Alexia, 60280 VENETTE (FR)
(74) Mandataire: Arkema Patent

(57) **Abrégé**

La présente invention concerne une composition réticulable à l'humidité comprenant :
∘ un polyuréthane P1 comprenant au moins deux groupes isocyanate ;
∘ un polyuréthane P2 comprenant au moins un groupe isocyanate et un groupe ayant la formule (I) suivante :
[Chem 17]

-N(H)-C(=O)-X-R¹-Si(R²)ₚ(OR³)₃₋ₚ (I)

dans laquelle :
- X représente S ou NR⁴, R⁴ représentant H, un groupe alkyle, un groupe aryle, ou un groupe cycloalkyle ;
- R¹ représente un groupe hydrocarboné divalent comprenant de 1 à 12 atomes de carbone ;
- p est un nombre entier égal à 0, 1 ou 2, de préférence 0 ou 1 ;
- chaque R², identique ou différent, représente un groupe alkyle linéaire ou ramifié comprenant de 1 à 4 atomes de carbone ;
- chaque R³, identique ou différent, représente un groupe alkyle linéaire ou ramifié comprenant de 1 à 4 atomes de carbone ;
ladite composition étant caractérisée en ce que le ratio massique polyuréthane P1 : polyuréthane P2 va de 50 : 50 à 99 : 1.

## Description

### DOMAINE DE L'INVENTION

La présente invention a pour objet une composition réticulable à l'humidité, utilisable notamment dans le domaine de la construction, et qui est apte à former, après réticulation, un joint adhésif présentant de bonnes propriétés mécaniques.

### ARRIERE PLAN TECHNIQUE

Diverses compositions à base de polymère existent sur le marché, celles-ci pouvant être utilisées dans de nombreux domaines, notamment en tant que mastic. Les mastics permettent d'assembler (ou encore de joindre ou lier) deux substrats qui peuvent être choisis parmi les matériaux les plus divers, et peuvent être également utilisés comme joints d'étanchéité. Les mastics assurent à l'assemblage ainsi obtenu des propriétés mécaniques avantageuses de solidité, d'élasticité et/ou flexibilité ainsi que d'étanchéité aux fluides.

Par exemple, les compositions à base de polymère peuvent être utilisés comme mastic dans la construction des bâtiments, la construction navale, ou le domaine des transports (par exemple, routier, maritime, ferroviaire ou aérospatial).

Parmi les propriétés désirables d'un mastic de construction, on peut citer entre autres, sa capacité à adhérer à une variété de substrat, sa résistance aux conditions météorologiques (UV, ozone, eau), son élasticité... La capacité de mouvement est une propriété étroitement liée au module d'élasticité. Le module d'élasticité peut permettre de prédire les propriétés d'extension ou de compression d'un mastic. Le module est typiquement le ratio entre la force (« stress » en anglais) nécessaire pour étirer un mastic (« strain » en anglais) et la section du matériau à un certain point, typiquement à 100%. L'élongation est la longueur à laquelle le mastic peut s'allonger, exprimée en un pourcentage de sa taille initiale. Le module a un effet direct sur la capacité d'élongation, car plus la résistance à la traction est faible, plus le mastic peut s'étirer facilement.

Il est intéressant de rechercher des mastics ayant une capacité de déformation et de résilience (reprise élastique) importante, pour s'adapter à des mouvements significatifs sans engendrer une tension trop élevée sur le mastic ou le substrat.

De plus, il est courant d'utiliser dans les mastics base polyuréthane, des promoteurs d'adhésion du type époxysilane (et leurs dérivés) qui ne réagissent pas directement avec les fonctions isocyanate du polyuréthane, contrairement à des mercaptosilanes ou aminosilanes. Les époxysilanes réagissent avec la fonction amine issue de la réaction des fonctions isocyanate avec de l'eau. Toutefois, les époxysilanes et leurs dérivés sont typiquement des petites molécules dont la teneur doit être restreinte au vu de leur classification chimique, et qui pourrait être interdites dans le futur.

Il existe donc un besoin pour de nouvelles compositions adaptées pour la préparation de mastic présentant un bon compromis entre de bonnes propriétés mécaniques, de bonnes propriétés élastiques (élongation et reprise élastique), et de bonnes propriétés d'adhésion.

### Composition

La présente invention concerne une composition réticulable à l'humidité comprenant :
∘ un polyuréthane P1 comprenant au moins deux groupes isocyanate ;
∘ un polyuréthane P2 comprenant au moins un groupe isocyanate et un groupe ayant la formule (I) suivante :

   -N(H)-C(=O)-X-R¹-Si(R²)ₚ(OR³)₃₋ₚ (I)
dans laquelle :
- X représente S ou NR⁴, R⁴ représentant H, un groupe alkyle, un groupe aryle, ou un groupe cycloalkyle ;
- R¹ représente un groupe hydrocarboné divalent comprenant de 1 à 12 atomes de carbone ;
- p est un nombre entier égal à 0, 1 ou 2, de préférence 0 ou 1 ;
- chaque R², identique ou différent, représente un groupe alkyle linéaire ou ramifié comprenant de 1 à 4 atomes de carbone ;
- chaque R³, identique ou différent, représente un groupe alkyle linéaire ou ramifié comprenant de 1 à 4 atomes de carbone ;
ladite composition étant caractérisée en ce que le ratio massique polyuréthane P1 : polyuréthane P2 va de 50 : 50 à 99 : 1.

De préférence, dans la composition le ratio massique polyuréthane P1 : polyuréthane P2 va de 70 : 30 à 99 : 1, encore plus préférentiellement de 80 : 20 à 99 : 1.

### Polyuréthane P1

De préférence, le polyuréthane P1 comprend au moins deux groupes isocyanates en position terminale.

Le polyuréthane P1 est de préférence obtenu par un procédé comprenant une étape E1 de réaction de polyaddition :
i) d'une composition comprenant au moins un polyol ; et
ii) d'une composition comprenant au moins un polyisocyanate ;
dans des quantités telles que le rapport molaire NCO/OH (r1) est supérieur à 1.

Dans le cadre de l'invention, et sauf mention contraire, r₁ est le rapport molaire NCO/OH correspondant au rapport molaire du nombre de groupes isocyanates (NCO) sur le nombre de groupes hydroxyles (OH) portés respectivement par l'ensemble des polyisocyanate(s) et polyol(s) présents dans le milieu réactionnel de l'étape E1.

De préférence, le rapport molaire NCO/OH (r1) va de 1,0 à 2,0, de préférence de 1,2 à 2,0.

### Polyol

Par « polyol », on entend on entend un composé comprenant au moins deux groupements hydroxyle (-OH).

Le(s) polyol(s) utilisé(s) selon l'invention peu(ven)t être choisi(s) parmi ceux dont la masse moléculaire moyenne en nombre (Mn) va de 50 à 50 000 g/mol, de préférence de 100 à 20 000 g/mol, préférentiellement de 500 à 20 000 g/mol, et avantageusement de 500 à 5 000 g/mol.

Leur fonctionnalité hydroxyle peut aller de 2 à 6, préférentiellement de 2 à 3. La fonctionnalité hydroxyle est le nombre moyen de fonction hydroxyle par mole de polyol.

Le(s) polyol(s) utilisable(s) peu(ven)t être choisi(s) parmi les polyester polyols, les polyéther polyols, les polyène polyols, les polycarbonate polyols, les poly(éther-carbonate) polyols, et leurs mélanges.

Le(s) polyol(s) utilisable(s) peu(ven)t être choisi(s) parmi les polyols aromatiques, les polyols aliphatiques, les polyols arylaliphatiques et les mélanges de ces composés.

Les polyester polyols peuvent être choisis parmi les polyester diols et les polyester triols, et de préférence parmi les polyester diols.

Parmi les polyester polyols, on peut par exemple citer :
- les polyesters polyols d'origine naturelle tel que l'huile de ricin ;
- les polyesters polyols résultant de la polycondensation :
   - d'un ou plusieurs polyols aliphatiques (linéaires, ramifiés ou cycliques) ou aromatiques tels que par exemple le monoéthylène glycol, le diéthylène glycol, le 1,2-propanediol, le 1,3-propanediol, le 1,4-butanediol, le butènediol, le 1,6-hexanediol, le cyclohexane diméthanol, le tricyclodécane diméthanol, le néopentyl glycol, le cyclohexane diméthanol, le glycérol, le triméthylolpropane, le 1,2,6-hexanetriol, le sucrose, le glucose, le sorbitol, le pentaérythritol, le mannitol, la N-méthyldiéthanolamine, la triéthanolamine, un alcool gras dimère, un alcool gras trimère et leurs mélanges, avec
   - un ou plusieurs acide polycarboxylique ou son dérivé ester ou anhydride tel que l'acide 1,6-hexanedioïque (acide adipique), l'acide dodécanedioïque, l'acide azélaïque, l'acide sébacique, l'acide adipique, l'acide 1,18-octadécanedioïque, l'acide phtalique, l'acide isophtalique, l'acide téréphtalique, l'acide succinique, un acide gras dimère, un acide gras trimère et les mélanges de ces acides, un anhydride insaturé tel que par exemple l'anhydride maléique ou phtalique, ou une lactone telle que par exemple la caprolactone.
- les estolides polyols résultant de la polycondensation d'un ou plusieurs hydroxyacides, tel que l'acide ricinoléïque, sur un diol (on peut par exemple citer les « POLYCIN^{®} D-1000 » et « POLYCIN^{®} D-2000 » disponibles chez VERTELLUS).

Les polyester polyols suscités peuvent être préparés de manière conventionnelle, et sont pour la plupart disponibles commercialement.

Parmi les polyesters polyols, on peut par exemple citer les produits suivants de fonctionnalité hydroxyle égale à 2 : le « TONE^{®} 0240 » (commercialisé par UNION CARBIDE) qui est une polycaprolactone de masse moléculaire moyenne en nombre d'environ 2 000 g/mol, et un point de fusion de 50°C environ, le « DYNACOLL^{®} 7381 » (comercialisé par EVONIK) de masse moléculaire moyenne en nombre d'environ 3 500 g/mol, et ayant un point de fusion de 65°C environ, le « DYNACOLL^{®}7360 » (commercialisé par EVONIK) qui résulte de la condensation de l'acide adipique avec l'hexanediol, et a une masse moléculaire moyenne en nombre d'environ 3 500 g/mol, et un point de fusion de 55°C environ, le « DEKATOL^{®} 3008 » (commercialisé par la société BOSTIK) de masse molaire moyenne en nombre Mn voisine de 1 060 g/mol et dont l'indice hydroxyle va de 102 à 112 mg KOH/g. Il s'agit d'un produit issu de la condensation d'acide adipique, de diéthylèneglycol et de monoéthylèneglycol.

Le(s) polyéther polyol(s) utilisable(s) selon l'invention est (sont) de préférence choisi(s) parmi les polyoxyalkylène polyols, dont la partie alkylène, linéaire ou ramifiée, comprend de 1 à 4 atomes de carbone, plus préférentiellement de 2 à 3 atomes de carbone.

Plus préférentiellement, le(s) polyéther polyol(s) utilisable(s) selon l'invention est (sont) de préférence choisi(s) parmi les polyoxyalkylène diols ou polyoxyalkylène triols, dont la partie alkylène, linéaire ou ramifiée, comprend de 1 à 4 atomes de carbone, plus préférentiellement de 2 à 3 atomes de carbone, et leurs mélanges.

A titre d'exemple de polyoxyalkylène diols ou triols utilisables selon l'invention, on peut citer : les polyoxypropylène diols ou triols (aussi désignés par polypropylène glycol (PPG) diols ou triols) ayant une masse moléculaire moyenne en nombre (Mn) allant de 500 g/mol à 12 000 g/mol ; les polyoxyéthylène diols ou triols (aussi désignés par polyéthylène glycol (PEG) diols ou triols) ayant une masse moléculaire moyenne en nombre (Mn) allant de 500 g/mol à 12 000 g/mol; et leurs mélanges.

Les polyéther polyols suscités peuvent être préparés de manière conventionnelle, et sont largement disponibles dans le commerce. Ils peuvent être obtenus par polymérisation de l'oxyde d'alkylène correspondant en présence d'un catalyseur basique (par exemple de la potasse) ou d'un catalyseur à base d'un double complexe métal-cyanure.

A titre d'exemple de polyéther diol, on peut citer le polyoxypropylène diol commercialisé sous la dénomination « VORANOL^{®} P 1010 » par la société DOW de masse moléculaire moyenne en nombre (Mn) voisine de 1 020 g/mol et dont l'indice hydroxyle est d'environ 110 mg KOH/g, ou le « VORANOL^{®} P2000 » commercialisé par la société DOW de masse moléculaire moyenne en nombre voisine de 2 040 g/mol et dont l'indice hydroxyle est d'environ 55 mg KOH/g.

Le(s) polyène polyol(s) utilisable(s) selon l'invention peu(ven)t être choisi(s) de préférence parmi les polyènes comportant des groupes hydroxyles terminaux, et leurs dérivés correspondants hydrogénés ou époxydés.

De préférence, le(s) polyène polyol(s) utilisable(s) selon l'invention est (sont) choisi(s) parmi les polybutadiènes comportant des groupes hydroxyles terminaux, éventuellement hydrogénés ou époxydés. Préférentiellement, le(s) polyène polyol(s) utilisable(s) selon l'invention est (sont) choisi(s) parmi les homopolymères et copolymères de butadiène comportant des groupes hydroxyles terminaux, éventuellement hydrogénés ou époxydés.

Dans le cadre de l'invention, et sauf mention contraire, on entend par « groupes hydroxyles terminaux » d'un polyène polyol, les groupes hydroxyles situés aux extrémités de la chaîne principale du polyène polyol.

Les dérivés hydrogénés mentionnés ci-dessus peuvent être obtenus par hydrogénation totale ou partielle des doubles liaisons d'un polydiène comportant des groupes hydroxyles terminaux, et sont donc saturé(s) ou insaturé(s).

Les dérivés époxydés mentionnés ci-dessus peuvent être obtenus par époxydation chémiosélective des doubles liaisons de la chaîne principale d'un polyène comportant des groupes hydroxyles terminaux, et comportent donc au moins un groupe époxy dans sa chaîne principale.

A titre d'exemples de polyène polyols, on peut citer les homopolymères de butadiène, saturé ou insaturé, comprenant des groupes hydroxyles terminaux, éventuellement époxydés, tels que par exemple ceux commercialisés sous la dénomination « POLY BD^{®} ou KRASOL^{®} » par la société CRAY VALLEY.

Les polycarbonate polyols peuvent être choisis parmi les polycarbonate diols ou triols.

A titre d'exemple de polycarbonate diol, on peut citer le « CONVERGE^{®} POLYOL 212-20 » commercialisés par la société NOVOMER de masse moléculaire en nombre (Mₙ) égales à 2 000 g/mol dont l'indice hydroxyle est de 56 mg KOH/g, les « POLYOL C1090, C-2090 et C-3090 » commercialisés par KURARAY ayant une masse moléculaire en nombre (Mₙ) allant de 1 000 à 3 000 g/mol et un indice hydroxyle allant de 35 à 118 mg KOH/g.

De préférence, le polyuréthane P1 est obtenu à partir d'une composition i) comprenant un ou plusieurs polyéthers polyols.

De préférence, le polyuréthane P1 est obtenu à partir d'une composition i) comprenant un mélange de polyéther diol et de polyéther triol.

### Polyisocyanate

Par « polyisocyanate », on entend un composé comprenant au moins deux groupements isocyanate (-NCO).

Le polyisocyanate peut être choisi parmi les diisocyanates, les triisocyanate, et leurs mélanges.

Parmi les diisocyanates, on peut par exemple citer le groupe constitué de l'isophorone diisocyanate (IPDI), du pentaméthylène diisocyanate (PDI), de l'hexaméthylène diisocyanate (HDI), de l'heptane diisocyanate, de l'octane diisocyanate, du nonane diisocyanate, du décane diisocyanate, de l'undécane diisocyanate, du dodécane diisocyanate, du 4,4'-méthylènebis(cyclohexylisocyanate) (4,4'-HMDI), du norbornane diisocyanate, du norbornène diisocyanate, du 1,4-cyclohexane diisocyanate (CHDI), du méthylcyclohexane diisocyanate, de l'éthylcyclohexane diisocyanate, du propylcyclohexane diisocyanate, du méthyldiéthylcyclohexane diisocyanate, du cyclohexane diméthylène diisocyanate, du 1,5-diisocyanato-2-méthylpentane (MPDI), du 1,6-diisocyanato-2,4,4-triméthylhexane, du 1,6-diisocyanato-2,2,4-triméthylhexane (TMDI), du 4-isocyanatométhyl-1,8-octane diisocyanate (TIN), du (2,5)-bis(isocyanatométhyl)bicyclo[2.2.1]heptane (2,5-NBDI), du (2,6)-bis(isocyanatométhyl)bicyclo[2.2.1]heptane (2,6-NBDI), du 1,3-bis(isocyanatomethyl)cyclohexane (1,3-H6-XDI), du 1,4-bis(isocyanatomethyl)-cyclohexane (1,4-H6-XDI), du xylylène-diisocyanate (XDI) (en particulier le m-xylylène diisocyanate (m-XDI)), du toluène diisocyanate (en particulier le 2,4-toluène diisocyanate (2,4-TDI) et/ou le 2,6-toluène diisocyanate (2,6-TDI)), du diphénylméthane diisocyanate (en particulier le 4,4'-diphénylméthane diisocyanate (4,4'-MDI) et/ou le 2,4'-diphénylméthane diisocyanate (2,4'-MDI)), du tétraméthylxylylène diisocyanate (TMXDI) (en particulier le tétraméthyl (méta)xylylène diisocyanate), d'un allophanate de PDI (n = 5) ou de HDI (n= 6) ayant par exemple la formule (Y) suivante : 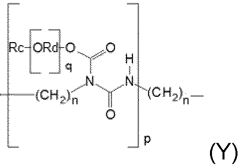 dans laquelle p est un nombre entier allant de 1 à 2, q est un nombre entier allant de 0 à 9, et de préférence 2 à 5, R_{c} représente une chaine hydrocarbonée, saturée ou insaturée, cyclique ou acyclique, linéaire ou ramifiée, comprenant de 1 à 20 atomes de carbone, de préférence de 6 à 14 atomes de carbone, R_{d} représente un groupe divalent alkylène, linéaire ou ramifié, ayant de 2 à 4 atomes de carbones, et de préférence un groupe divalent propylène ; et de leurs mélanges.

Parmi les triisocyanates, on peut par exemple citer les isocyanurates, les biurets, et les adduits de diisocyanates et de triols.

Les isocyanurates peuvent être utilisé(s) sous la forme d'un mélange technique de (poly)isocyanurate(s) de pureté supérieure ou égale à 70% en poids isocyanurate(s).

A titre d'exemple de trimères de diisocyanates, on peut citer:
- le trimère isocyanurate d'hexaméthylène diisocyanate (HDI) : 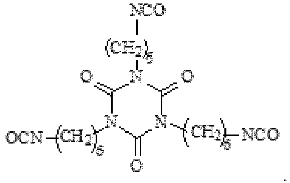
- le trimère isocyanurate d'isophorone diisocyanate (IPDI) :

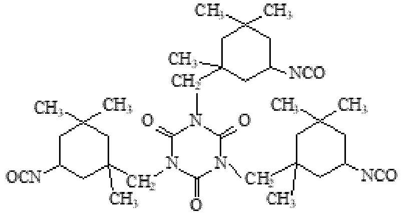

A titre d'exemple d'adduits de diisocyanates et de triols utilisables selon l'invention, on peut citer l'adduit de méta-xylylène diisocyanate (m-XDI) avec un triol. De tels adduits peuvent typiquement être obtenu par réaction d'addition mettant en œuvre lesdits composés. Les modalités d'une telle réaction d'addition sont par exemple décrites dans EP3101044.

Le triol mis en œuvre est, de préférence un triméthylolalcane comprenant un alcane comprenant de 1 à 20 atomes de carbone et 3 groupes méthylol tel que par exemple le trimethylolmethane, le trimethylolethane, le trimethylolpropane, le tri-methyloln-butane, le trimethylolisobutane, le trimethylols-butane, le trimethylolt-butane, le trimethylolpentane, le trimethylolhexane, le trimethylolheptane, le trimethyloloctane, le trimethylolnonane, le trimethyloldecane, le trimethylolundecane, et le trimethyloldo-decane.

De manière plus préférée, parmi les triols utilisables pour obtenir l'adduit de m-XDI et de triol, on peut citer le Glycérol de formule HOH₂C-CHOH-CH₂OH, le Triméthylolméthane (TMM) de formule HC(CH₂-OH)₃, le Triméthyloléthane (TME) de formule H₃C-C(CH₂-OH)₃ et le Triméthylolpropane (TMP) de formule CH₃-CH₂-C(CH₂-OH)₃.

Le MDI peut se présenter sous la forme d'un isomère ou d'un mélange d'isomères, tel que le 4,4'-MDI et/ou le 2,4'-MDI.

Le TDI peut se présenter sous la forme d'un isomère ou d'un mélange d'isomères, tel que le 2,4-TDI et/ou le 2,6-TDI.

Les diisocyanates utilisable(s) sont largement disponibles dans le commerce. A titre d'exemple, on peut citer le SCURANATE^{®} TX commercialisé par la société VENCOREX, correspondant à un 2,4-TDI de pureté de l'ordre de 95%, le SCURANATE^{®} T100 commercialisé par la société VENCOREX, correspondant à un 2,4-TDI de pureté supérieure à 99% en poids, le DESMODUR^{®} I commercialisé par la société COVESTRO, correspondant à un IPDI, ou encore l'ISONATE ^{®} M125 commercialisé par DOW, correspondant à un MDI contenant au moins 97 % de 4,4'-MDI.

De préférence, le polyisocyanate est choisi parmi les diisocyanates.

De préférence, le polyisocyanate est choisi parmi le toluène diisocyanate (en particulier le 2,4-toluène diisocyanate (2,4-TDI) et/ou le 2,6-toluène diisocyanate (2,6-TDI)), le diphénylméthane diisocyanate (en particulier le 4,4'-diphénylméthane diisocyanate (4,4'-MDI) et/ou le 2,4'-diphénylméthane diisocyanate (2,4'-MDI)), l'isophorone diisocyanate (IPDI), le xylylène-diisocyanate (XDI) (en particulier le m-xylylène diisocyanate (m-XDI)).

De préférence, le polyuréthane P1 est obtenu par un procédé comprenant une étape E1 de réaction de polyaddition :
i) d'une composition comprenant un polyéther diol et un polyéther triol ;
ii) d'une composition comprenant un diisocyanate choisi parmi le toluène diisocyanate, le diphénylméthane diisocyanate, l'isophorone diisocyanate, le xylylène-diisocyanate.

### Etape E1

Lors de l'étape E1, la réaction de polyaddition peut être mise en oeuvre à une température allant de 50°C à 100°C, de préférence de 60° à 80°C.

La réaction de polyaddition de l'étape E1 peut être mise en oeuvre en présence ou non d'au moins un catalyseur de réaction.

Le catalyseur peut être tout catalyseur connu de l'homme du métier pour catalyser la formation de polyuréthane par réaction d'au moins un polyisocyanate avec au moins un polyol.

Une quantité allant jusque 0,3% en poids de catalyseur(s) par rapport au poids du milieu réactionnel de l'étape E1 peut être utilisée.

La réaction de l'étape E1 peut également être mise en œuvre en présence d'un solvant. Le solvant peut être choisi dans le groupe constitué des esters, des cétones, des composés aromatiques, et de leurs mélanges. Le solvant peut être ajouté lors de l'étape E1 ou peut provenir des réactifs de départ en solution dans ledit solvant. Le solvant peut par exemple être choisi dans le groupe constitué des esters, des cétones, des composés aromatiques, et de leurs mélanges. Le solvant peut par exemple être choisi parmi l'acétate d'éthyle, l'acétate de butyle, la méthyléthylcétone, la méthylisobutylcétone, le toluène, le xylène, et leurs mélanges.

Le polyuréthane P1 a de préférence une teneur en groupes NCO allant de 0,5 à 10%, plus préférentiellement de 1% à 8%.

La composition selon l'invention comprend de préférence de 5% à 60% en poids de polyuréthane P1, encore plus préférentiellement de 10% à 50% en poids par rapport au poids total de ladite composition.

### Polyuréthane P2

Le polyuréthane P2 comprend de préférence un groupe isocyanate terminal et un groupe terminal ayant la formule (I) :

-N(H)-C(=O)-X-R¹-Si(R²)ₚ(OR³)₃₋ₚ (I)

dans laquelle :
- X représente S ou NR⁴, R⁴ représentant H ou un groupe alkyle ou un groupe aryle ou un groupe cycloalkyle ;
- R¹ représente un groupe hydrocarboné divalent comprenant de 1 à 12 atomes de carbone ;
- p est un nombre entier égal à 0, 1 ou 2, de préférence 0 ou 1 ;
- R², identique ou différent, représente un groupe alkyl linéaire ou ramifié comprenant de 1 à 4 atomes de carbone ;
- R³, identique ou différent, représente un groupe alkyl linéaire ou ramifié comprenant de 1 à 4 atomes de carbone.

De préférence, le polyuréthane P2 comprend un groupe de formule (I) dans laquelle :
- X représente S ; et/ou
- R¹ représente un alkylène linéaire ou ramifié comprenant de 1 à 6 atomes de carbone ; et/ou
- p représente 0 ; et/ou
- R³, identique ou différent, représente méthyle ou éthyle.

De préférence encore, le polyuréthane P2 comprend un groupe de formule (I) dans laquelle :
- X représente S ; et
- R¹ représente un alkylène linéaire ou ramifié comprenant de 1 à 6 atomes de carbone ; et
- p représente 0 ; et
- R³, identique ou différent, représente méthyle ou éthyle.

Le polyuréthane P2 est de préférence obtenu par un procédé comprenant une étape E2 de réaction d'une composition comprenant un polyuréthane P1 avec au moins un organosilane de formule (II) suivante :

H-X-R¹-Si(R²)ₚ(OR³)₃₋ₚ (II)

dans des quantités telles que le rapport molaire NCO/XH (r2) va de 70 à 200, de préférence de 90 à 140.

### Etape E2

L'étape E2 peut être mise en oeuvre à une température allant de 23°C et 80°C.

La réaction de de l'étape E2 peut être mise en oeuvre en présence ou non d'au moins un catalyseur de réaction.

Le catalyseur peut être tout catalyseur connu de l'homme du métier. Une quantité allant jusque 0,3% en poids de catalyseur(s) par rapport au poids du milieu réactionnel de l'étape E2 peut être utilisée.

La réaction de l'étape E2 peut également être mise en oeuvre en présence d'un solvant. Le solvant peut être choisi parmi dans le groupe constitué des esters, des cétones, des composés aromatiques, et de leurs mélanges. Le solvant peut être ajouté lors de l'étape E1, lors de l'étape E2 ou peut provenir des réactifs de départ en solution dans ledit solvant. Le solvant peut par exemple être choisi parmi l'acétate d'éthyle, l'acétate de butyle, l'acétone, la méthyléthylcétone, la méthylisobutylcétone, le toluène, le xylène, et leurs mélanges.

Dans le cadre de l'invention, et sauf mention contraire, r₂ est le rapport molaire NCO/XH correspondant au rapport molaire du nombre de groupes isocyanates sur le nombre de groupes XH portés respectivement par l'ensemble des isocyanate(s) (s'agissant notamment du polyuréthane P1), et des organosilanes présents dans le milieu réactionnel de l'étape E2.

L'organosilane de formule (II) peut être choisi dans le groupe constitué du 2-mercaptoethylmethyldimethoxysilane, du 2-mercaptoethyltrimethoxysilane, du 2-mercaptoethyltriethoxysilane, du 3-mercaptopropylmethyldimethoxysilane, du 3-mercaptopropyldimethylmethoxysilane, du 3-mercaptopropyltrimethoxysilane, du 3-mercaptopropylmethyldiethoxysilane, du 3-mercaptopropyltriethoxysilane, du 3-mercaptopropylethyldimethoxysilane, du 3-mercaptopropylethyldiethoxysilane, du 3-aminopropyltriméthoxysilane, du 3-aminopropyltriéthoxysilane, du 3-aminopropyldiéthoxyméthylsilane, du 3-aminopropyldiméthoxymethylsilane, du N-butyl-3-aminopropyltriméthoxysilane, du N-butyl-3-aminopropyltriéthoxysilane, du N-phényl-3-aminopropyltriméthoxysilane, du N-phényl-3-aminopropyltriéthoxysilane, et de leurs mélanges.

Les organosilanes peuvent être commercialement disponibles tels que par exemple le Dynasylan^{®} 1189 commercialisé par Evonik, ou encore le SILQUEST^{®} A1110 commercialisé par Momentive, ou encore le Dynasylan^{®} MTMO commercialisé par Evonik.

L'organosilane de formule (II) est de préférence choisi parmi ceux dans laquelle :
- X représente S ; et/ou
- R¹ représente un alkylène linéaire ou ramifié comprenant de 1 à 6 atomes de carbone ; et/ou
- p représente 0 ; et/ou
- R³, identique ou différent, représente méthyle ou éthyle.

De préférence encore, l'organosilane de formule (II) est choisi parmi ceux dans laquelle :
- X représente S ; et
- R¹ représente un alkylène linéaire ou ramifié comprenant de 1 à 6 atomes de carbone ; et
- p représente 0 ; et
- R³, identique ou différent, représente méthyle ou éthyle.

Encore plus préférentiellement, l'organosilane de formule (II) est choisi parmi le 3-mercaptopropyltrimethoxysilane, le 3-mercaptopropyltriethoxysilane, et leurs mélanges.

La composition selon l'invention comprend le polyuréthane P2 dans une teneur inférieure ou égale à 4% en poids par rapport au poids total de ladite composition.

Encore plus préférentiellement, la composition comprend le polyuréthane P2 dans une teneur massique inférieure ou égale à 3 % par rapport au poids total de ladite composition.

Le polyuréthane P2 a de préférence une masse moléculaire moyenne en poids (Mw) allant de 5 000 g/mol à 100 000 g/mol, encore plus préférentiellement de 8 000 g/mol à 60 000 g/mol, et encore plus préférentiellement de 10 000 g/mol à 40 000 g/mol.

La masse moléculaire moyenne en poids des polymères peut être mesurée par des méthodes bien connues de l'homme du métier, par exemple par RMN ou par chromatographie d'exclusion stérique en utilisant des étalons de type polystyrène.

Selon un mode de réalisation préféré, la composition selon l'invention comprend de 5% à 60% en poids du mélange de polyuréthanes P1 et P2 par rapport au poids total de ladite composition.

### Agent de rhéologie

La composition selon l'invention comprend de préférence au moins un agent de rhéologie.

L'agent de rhéologie est de préférence un agent thixotropique. Un agent thixotropique influe généralement la thixotropie d'une composition. La thixotropie est la propriété de certaines compositions à devenir moins visqueuses quand une force constante (par exemple, cisaillement à contrainte constante) est appliquée et, après arrêt de la sollicitation, la viscosité revient à son état initial après un laps de temps approprié. Plus la force est élevée, plus la viscosité diminue.

En particulier, l'agent thixotropique peut être choisi parmi :
- les plastisols de PVC, correspondant à une suspension de PVC dans un agent plastifiant miscible avec le PVC, obtenue en particulier in situ par chauffage à des températures allant de 60°C à 80°C. Ces plastisols peuvent être ceux décrits notamment dans l'ouvrage « Polyurethane Sealants », Robert M. Evans, ISBN 087762-998-6 ;
- la silice pyrogénée ;
- les suspensions dans un plastifiant de bis-urée issue de la réaction d'un diisocyanate avec une amine aliphatique primaire ;
- les cires dérivées d'huile de ricin, telle que par exemple THIXCIN^{®} R disponible chez ELEMENTIS ;
- les cires d'amides, de préférence micronisées, telles que par exemple le CRAYVALLAC^{®} SLX, le CRAYVALLAC^{®} SLW ou le CRAYVALLAC^{®} SUPER commercialisés par Arkema, ou bien le THIXATROL^{®} AS8053 ou le THIXATROL^{®} MAX qui sont disponibles chez ELEMENTIS, ou encore le RHEOBYK 7503 commercialisé par BYK ; et
- leurs mélanges.

De préférence, l'agent thixotropique est choisi parmi les cires d'amides, les suspensions dans un plastifiant de bis-urée issue de la réaction d'un diisocyanate avec une amine aliphatique primaire, et leurs mélanges.

De préférence, l'agent thixotrope est choisi parmi les suspensions dans un plastifiant de bis-urée issue de la réaction d'un diisocyanate avec une amine aliphatique primaire.

La suspension de bis-urée dans un plastifiant comprend de préférence :
- de 1 % à 40 % en poids d'une bis-urée obtenue par réaction d'une amine aliphatique primaire avec un diisocyanate de masse molaire inférieure à 500 g/mol, par rapport au poids total de ladite suspension, et
- de 60 % à 99% en poids d'un plastifiant choisi parmi les alkylphtalates, le tétravalérate de pentaérythritol, les esters d'acide alkylsulphonique et de phénol, le diisononyl-1,2-cyclohexane dicarboxylate, le 3,3'-[méthylènebis(oxyméthylène)]bis[heptane], le dioctyl carbonate et leurs mélanges, par rapport au poids total de ladite suspension,
ladite suspension étant une suspension de particules solides de bis-urée dans une phase continue de plastifiant.

Avantageusement, la bis-urée est obtenue par réaction d'une n-alkylamine comprenant de 1 à 22 atomes de carbone, de préférence la n-butylamine, avec un diisocyanate de formule NCO-R⁶-NCO, dans laquelle R⁶ est choisi parmi l'un des radicaux divalents suivants dont les formules ci-dessous font apparaître les 2 valences libres :
- i) le radical divalent dérivé de l'isophorone : 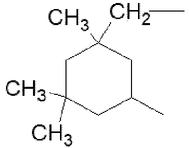
- ii) le radical divalent 4,4'-méthylène-bis(cyclohexyle) : 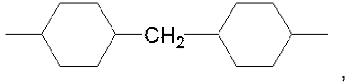
- iii) le radical divalent dérivé du 2,4-diisocyanate de toluène (ou 2,4-TDI) ou du 2,6-diisocyanate de toluène (ou 2,6-TDI) de formules respectives : 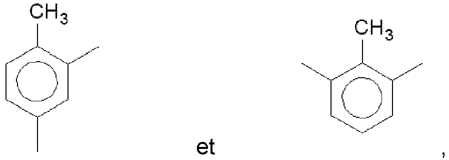
- iv) le radical divalent dérivé du 4,2'-diisocyanate de diphénylméthylène (ou 4,2'-MDI) ou du 4,4'-diisocyanate de diphénylméthylène (ou 4,4'-MDI), de formules respectives : 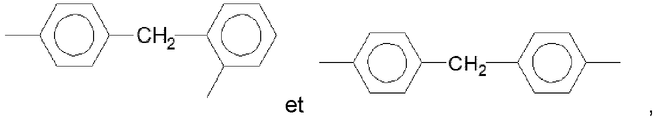
- v) le radical hexaméthylène : -(CH₂)₆-,
- vi) le radical m-xylylène : 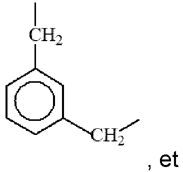
- vii) le radical hexahydro-m-xylylène :

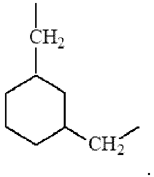

De préférence, R⁶ est le radical divalent dérivé 4,2'-MDI ou du 4,4'-MDI, plus préférentiellement du 4,4'-MDI.

De préférence encore, la bis-urée est obtenue par réaction de n-butylamine avec un diisocyanate de formule NCO-R⁶-NCO, dans laquelle R⁶ est le radical divalent dérivé 4,2'-MDI ou du 4,4'-MDI, de préférence du 4,4'-MDI.

Comme indiqué ci-avant pour ce mode de réalisation, le plastifiant mis en œuvre dans la suspension de bis-urée est choisi parmi les alkylphtalates, le tétravalérate de pentaérythritol, les esters d'acide alkylsulphonique et de phénol, le diisononyl-1,2-cyclohexane dicarboxylate, le 3,3'-[méthylènebis(oxyméthylène)]bis[heptane], le dioctyl carbonate et leurs mélanges.

Les alkylphtalates sont de préférence formés par le groupe constitué du diisodécyl phtalate (DIDP), du di(2-propylheptyl) phthalate et leurs mélanges.

Avantageusement, le plastifiant est choisi parmi les alkylphtalates, de préférence parmi le diisodécyl phtalate, le di(2-propylheptyl) phthalate et leurs mélanges, plus préférentiellement est le diisodécyl phtalate.

Selon un mode de réalisation préféré, la suspension de bis-urée dans un plastifiant est constituée de :
- de 1 % à 40 % en poids d'une bis-urée obtenue par réaction d'une amine aliphatique primaire avec un diisocyanate de masse molaire inférieure à 500 g/mol, par rapport au poids total de ladite suspension, et
- de 60 % à 99% en poids d'un plastifiant choisi parmi les alkylphtalates, le tétravalérate de pentaérythritol, les esters d'acide alkylsulphonique et de phénol, le diisononyl-1,2-cyclohexane dicarboxylate, le 3,3'-[méthylènebis(oxyméthylène)]bis[heptane], le dioctyl carbonate et leurs mélanges, par rapport au poids total de ladite suspension,
ladite suspension se présentant sous la forme d'une suspension de particules solides de la bis-urée dans une phase continue de plastifiant, et la bis-urée et le plastifiant étant tels que décrits ci-avant, y inclus les modes de réalisation.

Avantageusement, ladite suspension comprend, et de préférence est constituée, de 5 à 30 % en poids de bis-urée et de 70 à 95 % en poids de plastifiant, les pourcentages étant par rapport au poids total de ladite suspension. La bis-urée et le plastifiant sont tels que décrits ci-avant, y inclus les modes de réalisation.

La suspension de bis-urée dans un plastifiant peut être préparée selon le procédé décrit ci-après.

La réaction de l'amine aliphatique primaire avec le diisocyanate est très exothermique. Pour éviter que la grande quantité de chaleur formée par la réaction n'entraîne la décomposition de la bis-urée formée, l'amine aliphatique primaire et le diisocyanate sont chacun dissous dans un plastifiant, préalablement à leur mise en réaction, le plastifiant servant ainsi à évacuer la chaleur formée par la réaction. Les deux solutions dans un plastifiant de l'amine aliphatique primaire et du diisocyanate sont avantageusement introduites chacune dans un réacteur par des injecteurs, sous une pression de 40 à 200 bar, de préférence de 80 à 120 bar, les deux solutions étant ainsi mises en contact à l'état de liquide pulvérisé. Les quantités de réactifs correspondent de préférence à un rapport (nombre de moles d'amine aliphatique primaire) / (nombre de moles de diisocyanate) d'environ 2. La bis-urée est produite par la réaction sous la forme de particules solides dispersées dans une phase continue de plastifiant, la viscosité Brookfield de la suspension correspondante, mesurée à la température de 23 °C étant généralement comprise entre 1 et 50 Pa.s, de préférence entre 10 et 25 Pa.s.

Par « cires dérivées d'huile de ricin », on entend des cires obtenues à partir d'huile de ricin, en particulier d'huile de ricin hydrogénée.

Par « cires d'amides », on entend des cires comprenant un ou plusieurs composés présentant au moins un groupement amide. En particulier, les cires d'amides peuvent être obtenues à partir d'acide(s) organique(s) (par exemple d'acide(s) gras) et de (di)amine(s).

Les cires d'amides sont de préférence micronisées, c'est-à-dire qu'elles présentent une taille de particules moyenne inférieure à 1 mm. Avantageusement, les cires d'amides présentent une taille de particules moyenne inférieure à 500 µm, de préférence, inférieure à 100 µm, plus préférentiellement, inférieure à 10 µm.

Dans la présente description, la taille de particules moyenne correspond avantageusement à la granulométrie d50, c'est-à-dire la taille maximale de 50% des plus petites particules en volume, et peut être mesurée avec un granulomètre, notamment par diffraction laser sur un appareil de type MALVERN (par exemple selon la norme ISO 13320).

Sauf indication contraire, les normes mentionnées dans toute la demande sont celles en vigueur à la date de dépôt de la demande.

De préférence, la teneur en agent de rhéologie dans la composition est comprise entre 1 % et 45 % en poids par rapport au poids total de ladite composition, de préférence encore entre 5 % et 40 % en poids, et plus préférentiellement entre 10 % et 35 % en poids.

### Charge

La composition selon l'invention comprend de préférence au moins une charge.

La charge peut être choisie parmi les charges minérales, les charges organiques, et leurs mélanges, de préférence parmi les charges minérales.

A titre d'exemple de charge minérale, on peut utiliser n'importe quelle charge minérale habituellement utilisée dans le domaine des compositions adhésives. Ces charges se présentent typiquement sous la forme de particules de géométrie diverse. Elles peuvent être par exemples sphériques, fibreuses, ou présenter une forme irrégulière.

Les charges minérales peuvent être choisies parmi les argiles, le quartz, les charges carbonatées, les kaolins, le gypse, les microsphères creuses minérales, les zéolites, et leurs mélanges.

Parmi les microsphères creuses minérales, on peut citer les microsphères creuses de verre, et plus particulièrement celles en borosilicate de sodium et de calcium ou en aluminosilicate.

De préférence, les charges minérales sont choisies parmi les charges carbonatées, les zéolites, et leurs mélanges.

Avantageusement, la charge carbonatée est choisie parmi les carbonates de métaux alcalin ou alcalino-terreux et leurs mélanges. De préférence, la charge carbonatée comprend du carbonate de calcium, plus préférentiellement la charge carbonatée est du carbonate de calcium broyé et/ou du carbonate de calcium enrobé d'acides gras (ce dernier étant de préférence précipité).

Lorsque le carbonate de calcium est enrobé d'acides gras, cela permet de conférer une hydrophobie totale ou partielle aux particules de carbonate de calcium. De plus, l'enrobage d'acides gras joue le rôle de revêtement hydrophobe qui peut permettre d'empêcher que le carbonate de calcium n'absorbe les constituants de la composition et ne les rende inefficaces. Le revêtement hydrophobe du carbonate de calcium peut représenter de 0,1% à 3,5% en poids, par rapport au poids total de carbonate de calcium.

De préférence, les acides gras enrobant le carbonate de calcium comprennent ou sont constitués à plus de 50 % en poids de l'acide stéarique par rapport au poids total des acides gras.

Parmi les carbonates de métaux alcalins ou alcalino-terreux, on peut par exemple citer la craie BL 200 TB commercialisé OMYA (DV50 = 9 microns), le SOCAL 312 commercialisé par SOLVAY (carbonate de calcium hydrophobé avec un DV50 de 1 micron), ou le OMYA BSH commercialisé par OMYA (carbonate de calcium hydrophobé).

Avantageusement, les zéolites sont choisies parmi les zéolites synthétiques de type A, X et/ou Y, de préférence de type A, et ont un diamètre de pore compris entre 3 Å et 5 Å, de préférence de 3 Å.

La taille de particules moyenne de la charge minérale peut aller de 10 nm à 400 µm, de préférence de 20 nm à 100 µm, plus préférentiellement de 30 nm à 50 µm.

A titre d'exemple de charge organique, on peut citer n'importe quelle charge organique, notamment polymérique, habituellement utilisée dans le domaine des compositions adhésives.

On peut utiliser par exemple du polychlorure de vinyle (PVC), des polyoléfines, du caoutchouc, de l'éthylène vinyl acétate (EVA), des microsphères creuses en polymère thermoplastique expansibles ou non expansibles (telles que des microsphères creuses en chlorure de vinylidène/acrylonitrile) et/ou des fibres aramides (telles que le Kevlar^{®}).

Le PVC peut être un homopolymère et/ou un copolymère de PVC, de préférence un homopolymère de PVC.

A titre d'exemples de copolymères de PVC, on peut citer les copolymères obtenus par polymérisation du chlorure de vinyle avec un ou plusieurs monomères choisis parmi l'acrylonitrile, l'éthylène, le propylène, le chlorure de vinylidène et/ou l'acétate de vinyle, notamment l'acétate de vinyle.

La taille des particules de la charge PVC peut varier entre 0,05 µm et 0,8 µm, de préférence entre 0,1 µm et 0,5 µm. La taille des particules peut être mesurée par microscopie électronique, notamment à balayage.

La charge de PVC peut être obtenue par émulsion.

Il existe différentes types de charge de PVC commercialement disponibles.

On peut utiliser également des microsphères creuses en polymère thermoplastique expansibles ou non expansibles. On peut notamment citer des microsphères creuses en chlorure de vinylidène/acrylonitrile.

De préférence, la composition selon l'invention comprend au moins une charge carbonatée (de préférence du carbonate de calcium), et une charge de PVC.

De préférence, la composition selon l'invention comprend de 5% à 50% en poids de charge(s), préférentiellement de 5% à 40% en poids par rapport au poids total de ladite composition.

### Autres additifs

La composition selon l'invention peut comprendre en outre au moins un additif choisi parmi les plastifiants, les solvants, les stabilisants UV, les agents débullant, les promoteurs d'adhésion, et leurs mélanges.

De préférence, la composition comprend un additif choisi parmi les plastifiants.

L'additif choisi parmi les plastifiants peut être n'importe quel plastifiant habituellement utilisé dans le domaine des compositions adhésives.

Cet additif choisi parmi les plastifiants peut par exemple être choisi parmi le diisodécyl phtalate, le diisononyl phtalate (DINP), un ester d'acide alkylsulphonique et de phénol (par exemple le MESAMOLL^{®} commercialisé par LANXESS), l'hexahydrophtalate de diisononyle, le tétravalérate de pentaérythritol, et leurs mélanges.

La teneur en additif choisi parmi les plastifiants peut aller jusqu'à 10 % en poids par rapport au poids total de la composition.

Le solvant peut être choisi parmi les hydrocarbures aliphatiques (tels que le pentane, l'hexane, l'heptane, l'octane, le nonane, le décane, le dodécane, l'isohexane, l'isooctane, l'isododécane, le tétradécane, le dodécylbenzène, le cyclohexane, le kérosène et le naphtène), les hydrocarbures aromatiques (tels que benzène, toluène, xylène, alkylbenzène, solvant naphta, phénylxylyl éthane et diisopropylnaphtalène), les hydrocarbures halogénés (tels que tétrachlorure de carbone, chloroforme, dichlorométhane, bromure d'éthyle, trichloroéthylène, tétrachloroéthylène, trifluoroéthylène, tétrafluoroéthylène, trichlorotrifluoroéthylène et tétrachlorodifluoroéthylène), et leurs mélanges, de préférence parmi les hydrocarbures aromatiques, en particulier le diisopropylnaphtalène.

La teneur en solvant peut aller jusqu'à 10 % en poids par rapport au poids total de la composition, de préférence de 0% à 5 % en poids.

La composition selon l'invention peut comprendre jusqu'à 1 % en poids d'un ou plusieurs stabilisants UV (ou antioxydants) par rapport au poids total de ladite composition.

Les stabilisant UV sont typiquement introduits pour protéger la composition d'une dégradation résultant d'une réaction avec de l'oxygène qui est susceptible de se former par action de la chaleur ou de la lumière. Ces composés peuvent inclure des antioxydants capables de piéger les radicaux libres.

Le stabilisant UV (ou antioxydant) peut être choisi parmi les benzotriazoles, les benzophénones, les amines dites encombrées telles que le bis(1-octyloxy-2,2,6,6-tétraméthyl-4-pipéridyl)sébacate, le bis(2,2,6,6-tétraméthyl-4-pipéridyl)sébacate, le bis(1,2,2,6,6-pentaméthyl-4-pipéridyl)sébacate (N° CAS : 41556-26-7), le méthyl 1,2,2,6,6-pentaméthyl-4-pipéridyl sébacate (N° CAS : 82919-37-7), le 3-(3,5-di-*tert-*butyl-4-hydroxyphényl)propionate d'octadécyle, le 4,4'-bis(α,α-diméthylbenzyl)diphénylamine, et leurs mélanges.

Les agents débullant (ou anti-mousse) sont habituellement utilisés par l'homme du métier pour permettre l'élimination rapide des bulles formées lors de la préparation et de l'application des compositions ayant un composant comprenant un polyisocyanate.

L'agent débullant peut être n'importe quel agent débullant habituellement utilisé dans le domaine des compositions adhésives.

Par exemple, l'agent débullant peut être un polysiloxane, une aldimine et/ou une oxazolidine, en particulier un polysiloxane.

La teneur en agent débullant peut aller jusqu'à 2 % en poids par rapport au poids total de la composition bicomposante, de préférence de 0 % à 1 % en poids.

Le promoteur d'adhésion peut être choisi parmi les amino alcoxysilanes (tels que le (3-aminopropyl)triméthoxysilane, le 4-amino-3,3-diméthylbutyltriméthoxysilane, le N-(2-aminoéthyl)-3-aminopropyltriméthoxysilane), les mercapto alcoxysilanes, les époxy alcoxysilanes (tels que (3-glycidyloxypropyl)triméthoxysilane), et leurs mélanges.

De préférence, la composition ne comprend pas d'aminosilane.

De préférence, la composition ne comprend pas d'éthoxymercaptosilane, et encore plus préférentiellement la composition ne comprend pas de mercaptosilane.

De préférence, la composition selon l'invention comprend moins de 4% en poids de polyuréthane comprenant deux fonctions terminales silylées (dépourvu de fonction isocyanate), préférentiellement moins de 2% en poids, et encore plus préférentiellement moins de 1,5% en poids par rapport au poids total de la composition.

De préférence, la teneur en polyisocyanate résiduel (issu de la préparation des polyuréthanes P1 et P2) dans la composition est inférieure ou égale à 0,5 % en poids par rapport au poids total de ladite composition.

La composition selon l'invention peut être préparée par simple mélange de ses ingrédients.

### Utilisation de la composition

La présente invention vise également l'utilisation de la composition telle que définie ci-dessus comme adhésif, notamment comme adhésif semi-structural, comme mastic ou comme revêtement.

En particulier, la présente invention vise l'utilisation de la composition telle que définie ci-dessus comme adhésif, mastic ou revêtement, dans le domaine de la construction des bâtiments, dans le domaine de la fabrication des moyens de transport, comme l'industrie automobile, ferroviaire, aérospatiale ou navale.

La composition selon l'invention est telle que décrite ci-avant, y inclus les modes de réalisation et caractéristiques préférées.

La composition selon l'invention présente avantageusement au moins l'un des avantages suivants :
- elle conduit après réticulation à un joint ayant un allongement à la rupture supérieur à 300%, plus préférentiellement supérieur ou égal à 400%, encore plus préférentiellement supérieur ou égal à 600% ;
- elle conduit après réticulation à un joint ayant une reprise élastique supérieure ou égale à 70% ;
- elle conduit après réticulation à un joint ayant un module à 100% d'élongation inférieur ou égal à 1 MPa ;
- elle possède une faible teneur en polyisocyanate résiduel issu de la préparation des polyuréthanes P1 et P2 (de préférence inférieure ou égale à 0,5% en poids par rapport au poids total de ladite composition).

L'homme du métier sait comment déterminer l'allongement à la rupture d'une composition. Par exemple, l'allongement à la rupture peut être mesuré conformément à la norme ISO37.

La reprise élastique peut être mesurée conformément à la norme ISO 11600 de 2002 qui renvoie à la norme ISO7389 de 2002 et à vitesse constante égale à 5,5 mm/min.

Le module à 100% d'élongation peut être mesuré selon la norme ISO8339.

En particulier, la reprise élastique et l'allongement à la rupture peuvent être mesurées comme décrit dans l'Exemple 4 ci-après.

### Procédé d'assemblage de substrats

La présente invention concerne également un procédé d'assemblage de substrats comprenant :
- l'enduction, sur au moins une surface des substrats à assembler, de la composition telle que définie ci-dessus, puis
- la mise en contact des substrats.

La composition selon l'invention est telle que décrite ci-avant, y inclus les modes de réalisation et caractéristiques préférées.

Il est entendu que, lors de l'étape d'enduction et de l'étape de mise en contact, la composition selon l'invention est à l'état non durci.

Les substrats peuvent être identiques ou différents.

Les substrats concernés sont très variés et sont, par exemple, des substrats inorganiques tels que le béton, les métaux et/ou les alliages (comme les alliages d'aluminium, l'acier, les métaux non-ferreux et les métaux galvanisés), et/ou des substrats organiques comme le bois et/ou des plastiques (comme le PVC, le polycarbonate, le PMMA, le polyéthylène, le polypropylène, les polyesters, les résines époxy).

### Article

La présente invention vise aussi un article comprenant la composition selon l'invention (durcie ou non), ladite composition liant au moins deux substrats dudit article.

La composition selon l'invention est telle que décrite ci-avant, y inclus les modes de réalisation et caractéristiques préférées.

L'article peut être obtenu grâce au procédé d'assemblage de substrats selon l'invention (incluant les modes de réalisation et caractéristiques préférées).

Les substrats sont de préférence tels que décrits ci-avant pour le procédé d'assemblage de substrats selon l'invention.

Tous les modes de réalisation décrits ci-dessus peuvent être combinés les uns avec les autres. En particulier, les différents constituants susmentionnés de la composition, et notamment les modes préférés, peuvent être combinés les uns avec les autres.

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

Les exemples ci-après sont donnés à titre purement illustratif de l'invention et ne sauraient être interprétés comme en limitant la portée.

### Exemples

Les ingrédients suivants ont été utilisés :
- poudre de PVC (homopolymère) obtenue par émulsion ;
- IPDI (Evonik): diisocyanate d'isophorone
- Omya BL (OMYA) : carbonate de calcium
- TiO₂ (Kronos) : dioxide de titane rutile
- Silane A187 (Evonik) : ([3-(2,3-époxypropoxy)propyl]triméthoxysilane)
- Desmodur L75 (Covestro) : polyisocyanate aromatique (ca. 75 % dans acetate d'éthyle)
- Incozol BH (Incorez) : aldimine (N,N-dibenzylidène polyoxypropylène diamine)
- solution 10% acide salicylique dans DPK Disflamoll ;
- Catex E70 (Tib Chemicals) : dilaurate de dibutylétain
- DYNASYLAN^{®} MTMO (Evonik): mercaptosilane (3-triméthoxysilylpropane-1-thiole)
- VORANOL^{™} P2000 commercialisé par la société DOW est un Polypropylène Glycol (PPG) de fonctionnalité F = 2 ayant un IOH de 55 mg KOH/g soit une masse moléculaire moyenne en nombre (Mn) voisine de 2040 g/mol ;
- Polyol P : polyéther polyol ayant une fonctionnalité de 3, et un IOH allant de 45 à 50 mg KOH/g ;
- Polyisocyanate T : mélange 80/20 de 2,4- et 2,6-TDI ;
- IRGANOX^{®} 1076 : antioxydant commercialisé par BASF ;
- TINUVIN^{®} 765 : amine liquide encombrée commercialisée par BASF ;
- DINP : Diisononylphtalate commercialisé par Sigma Aldrich

### Exemple 1 : préparation d'un polyuréthane terminé NCO

Les ingrédients sont mélangés dans un réacteur maintenu sous agitation constante et sous azote, à 70°C.

L'ensemble est maintenu en mélange à cette température jusqu'à la consommation complète des fonctions hydroxyle des polyols.

Le taux d'avancement de la réaction est contrôlé en mesurant la teneur en groupe NCO par un dosage de dibutylamine en retour, à l'aide d'acide chlorhydrique selon la norme NF T52-132. La réaction est stoppée lorsque la teneur en groupe NCO mesurée est environ égal à la teneur en groupe NCO souhaitée (1,8%).

Les proportions des ingrédients pour la préparation dudit polyuréthane sont indiquées dans le tableau 1 suivant (% en poids) :

**[Tableau 1] :**

| | |
|---|---|
| VORANOL^{™} 2000L | 47,56% |
| Polyol P | 22,87% |
| PLASTIFIANT | 19,34% |
| Polyisocyanate T | 9,53% |
| IRGANOX^{®}1076 | 0,42% |
| TINUVIN^{®} 765 | 0,27% |
| CATEX E70 | 0,01% |

*Les pourcentages sont des pourcentages en poids par rapport au poids total de la composition.*

### Exemple 2 : Préparation de la bis-urée (agent de rhéologie)

Deux solutions sont préparées :
- une solution A de n-butylamine dans le diisodécyl phtalate (DIDP), constituée de 17,17 % en poids de n-butylamine et de 82,83 % en poids de DIDP, les pourcentages étant sur le poids total de la solution A, puis
- une solution B de 4,4'-MDI dans le DIDP, constituée de 29,46 % en poids de 4,4'-MDI dans 70,54 % en poids de DIDP, les pourcentages étant sur le poids total de la solution B.

Les 2 solutions A et B sont chauffées à 100°C, puis introduites, chacune sous une pression de 100 bar, dans un réacteur, dans lequel elles sont pulvérisées en continu l'une sur l'autre dans un ratio A/B = 50,1 / 49,9 en poids, correspondant à un rapport molaire n-butylamine/ MDI égal à 2. La réaction est immédiate et la température du réacteur atteint 140°C en fin de fabrication.

En sortie de réacteur, on obtient une dispersion stable de 23,3 % en poids (par rapport au poids total de la dispersion) dans le DIDP d'une bis-urée de formule :

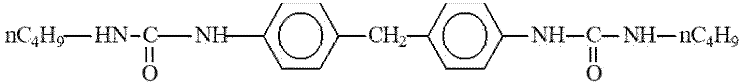

La viscosité Brookfield de la suspension mesurée à 23°C est de 15 Pa.s.

### Exemple 3 : préparation d'une composition réticulable à l'humidité

La composition suivante a été préparée selon le mode opératoire suivant :
Dans un réacteur, le DINP et le polyuréthane de l'exemple 1 ont été ajoutés et mélangés pendant 30 minutes à 23°C. Le MTMO a été ajouté, et le mélange réactionnel agité pendant 15 minutes à 23°C, de sorte à former un mélange comprenant le DINP, le polyuréthane de l'exemple 1 n'ayant pas réagi, et un polyuréthane hybride comprenant une terminaison isocyanate et une terminaison silane issu de la réaction du MTMO avec une fonction NCO du polyuréthane de l'exemple 1. Les suivis par IR ont permis de montrer que l'ensemble du MTMO a été consommé. Le ratio massique polyuréthane de l'exemple 1 : polyuréthane terminé isocyanate et terminé silane est supérieur à 94 : 6. Le polyuréthane hybride est synthétisé in situ et pas isolé dans le cas présent.

L'Omya BL, la poudre de PVC et le dioxyde de titane ont ensuite été ajoutés au mélange réactionnel puis mélangés pendant 10 min. Puis, l'IPDI a été ajouté avant de mélanger le tout sous vide (-0,8 bars) pendant 10 minutes. Ensuite, la bis-urée de l'exemple 2 a été ajoutée sous vide (-0.8 bars) pendant 5 min, et mélangé pendant 10 minutes sous vide toujours, avant l'ajout des autres ingrédients.

Le mélange a été agité sous vide (-0,8 bars) pendant 10 à 20 minutes.

| **Ingrédients** | **Composition C1** |
|---|---|
| DINP | *5*,*52* |
| Polyuréthane de l'exemple 1 | *31*,*5* |
| Dynasylan^{®}MTMO | *0,04* |
| | |
| Omya BL | *25,00* |
| Poudre de PVC | *9,50* |
| TiO₂ | *4*,*15* |
| IPDI | *0,29* |
| Bis-urée de l'exemple 2 | *21,00* |
| Incozol BH | *1*,*95* |
| Silane A187 | *0,09* |
| Desmodur L75 | *0,47* |
| Catex E70 | *0,03* |
| Sol 10% acide salicylique | *0,46* |
| **total** | ***100*** |

*Les ingrédients du tableau sont indiqués en % en poids par rapport au poids total de la composition.*

### Exemple 4 : propriétés de la composition C1

La mesure du temps de formation de peau (ou « skinning time » en anglais) a été réalisée en atmosphère contrôlée à une température de 23°C et une humidité relative d'environ 50%.

La composition a été appliquée à l'aide d'une spatule et sous la forme d'un cordon d'épaisseur 2 ou 3 mm. Sitôt après l'application dudit cordon, un chronomètre a été mis en route et il a été examiné toutes les 5 minutes à l'aide d'un léger appui d'un abaisse-langue si le film est sec ou si un résidu de composition est transféré sur l'outil. Le temps de formation de peau est le temps au bout duquel le cordon de composition est sec et pour lequel il n'y a plus aucun transfert de résidu de produit sur l'abaisse-langue. Le résultat est exprimé en minutes.

La mesure de la résistance et de l'allongement à la rupture (ou « elongation at break » en anglais) par essai de traction a été effectuée selon le protocole décrit ci-après. De même pour le module de Young.

Le principe de la mesure consiste à étirer dans une machine de traction, dont la mâchoire mobile se déplace à une vitesse constante égale à 500 mm/minute, une éprouvette standard constituée de la composition réticulée et à enregistrer, au moment où se produit la rupture de l'éprouvette, la contrainte de traction appliquée (en MPa) ainsi que l'allongement de l'éprouvette (en %). L'éprouvette standard est en forme d'haltère, comme illustré dans la norme internationale ISO 37.

Pour préparer l'haltère, la composition à tester (préalablement conditionnée dans une cartouche) est extrudée dans un moule en téflon, et est laissée durcir durant 14 jours dans les conditions standards (23°C et 50% d'humidité relative). La partie étroite de l'haltère utilisée a pour longueur 20 mm (+/- 0,5), pour largeur 4 mm et pour épaisseur 2 mm.

Le module à 100% d'élongation a été mesuré selon le test figurant dans la norme ISO11600 de 2002, qui renvoi à la norme ISO8339 de 2005 : contrainte de traction correspondant à un allongement de 100% de l'éprouvette.

La reprise élastique a été déterminée selon le test figurant dans la norme ISO11600 de 2002, qui renvoi à la norme ISO7389 de 2002.

Le fluage a été mesuré selon la norme ASTM D2202

Les résultats sont indiqués dans le tableau suivant :

| | **Composition C1** |
|---|---|
| Temps de formation de peau (en min) | 90 |
| Vitesse d'extrusion (en g/min) | 105,1 |
| Reticulation en profondeur (24h - mm) | 3,9 |
| Allongement à la rupture (en %) | 720 ± 0,76 |
| Module à 100% élongation (en MPa) | 0,86 ± 0,04 |
| Reprise élastique (en %) (ISO 7389 - conditionnement A) | 90,9 ± 1,3 |

La composition C1 conduit avantageusement à un joint adhésif présentant après réticulation de bonnes performances mécaniques dont :
- un allongement à la rupture supérieure ou égale à 400 %, de préférence supérieure ou égale à 600% ;
- une reprise élastique supérieure ou égale à 70% ;
- un module à 100% d'élongation inférieur ou égale à 1 MPa.

La composition C1 a une vitesse d'extrusion de 105,1 g/min qui permet une application aisée par l'utilisateur final, par exemple via un pistolet.

### Exemple 5 : préparation de compositions réticulables à l'humidité

Les compositions C2 et C3 suivantes ont été préparées selon le mode opératoire suivant :
Dans un réacteur, le DINCH et le polyuréthane de l'exemple 1 ont été ajoutés et mélangés pendant 30 minutes à 23°C. Le silane SILQUEST^{®}A1110 (C2) ou le silane Dynasylan^{®} 1189 (C3) a été ajouté, et le mélange réactionnel agité pendant 15 minutes à 23°C, de sorte à former un mélange comprenant le DINCH, le polyuréthane de l'exemple 1 n'ayant pas réagi, et un polyuréthane hybride comprenant une terminaison isocyanate et une terminaison silane issu de la réaction du silane SILQUEST^{®} A1110 ou Dynasylan^{®} 1189 avec une fonction NCO du polyuréthane de l'exemple 1. Les suivis par IR ont permis de montrer que l'ensemble du silane a été consommé. Le ratio massique polyuréthane de l'exemple 1 : polyuréthane terminé isocyanate et terminé silane est supérieur à 94 : 6. Le polyuréthane hybride est synthétisé in situ et pas isolé dans le cas présent.

L'Omya BL, la poudre de PVC et le dioxyde de titane ont ensuite été ajoutés au mélange réactionnel puis mélangés pendant 10 min. Puis, l'IPDI a été ajouté avant de mélanger le tout sous vide (-0,8 bars) pendant 10 minutes. Ensuite, la bis-urée de l'exemple 2 a été ajoutée sous vide (-0.8 bars) pendant 5 min, et mélangé pendant 10 minutes sous vide toujours, avant l'ajout des autres ingrédients.

Le mélange a été agité sous vide (-0,8 bars) pendant 10 à 20 minutes.

| **Ingrédients** | **Composition C2** | **Composition C3** |
|---|---|---|
| DINCH | *5,30* | *5*,*36* |
| Polyuréthane de l'exemple 1 | *31*,*46* | *31,47* |
| SILQUEST^{®} A1110 | *0,04* | - |
| Dynasylan^{®} 1189 | - | *0,04* |
| | | |
| Omya BL | *25,00* | *24*,*97* |
| Poudre de PVC | *9,50* | *9,50* |
| TiO₂ | *4,40* | *4,20* |
| IPDI | *0,29* | *0,29* |
| Bis-urée de l'exemple 2 | *20,95* | *21,00* |
| Incozol BH | *1*,*95* | *1*,*95* |
| Silane A187 | *0*,*1* | *0*,*1* |
| Desmodur L75 | *0,49* | *0,48* |
| Catex E70 | *0,04* | *0,04* |
| Sol 10% acide salicylique | *0,48* | *0,60* |
| **total** | ***100*** | ***100*** |

*Les ingrédients du tableau sont indiqués en % en poids par rapport au poids total de la composition.*

### Exemple 6 : propriétés des compositions C2 et C3

Le protocole et les tests sont similaires à ceux de l'exemple 4.

Les résultats sont indiqués dans le tableau suivant :

| | **Composition C2** | **Composition C3** |
|---|---|---|
| Temps de formation de peau (en min) | 100 | 105 |
| Allongement à la rupture (en %) | 720 ± 20 | 770 ± 79 |
| Module à 100% élongation (en MPa) | 0,91 ± 0,06 | 0,84 ± 0,02 |
| Reprise élastique (en %) (ISO 7389 - conditionnement A) | 93,5 ± 0,5 | 94,1 ± 0,5 |

Les compositions C2 et C3 conduisent avantageusement à un joint adhésif présentant après réticulation de bonnes performances mécaniques dont :
- un allongement à la rupture supérieure ou égale à 400 %, de préférence supérieure ou égale à 600% ;
- une reprise élastique supérieure ou égale à 70% ;
- un module à 100% d'élongation inférieur ou égale à 1 MPa.

### Exemple 7 : préparation de composition réticulable à l'humidité C4

La composition C4 a été préparée selon le mode opératoire suivant :
Dans un réacteur speedmixer, le Dynasilan MTMO a été ajouté dans du polyuréthane de l'exemple 1, et le mélange réactionnel agité pendant 10 minutes à 30°C à pression atmosphérique, de sorte à former un mélange comprenant le polyuréthane de l'exemple 1 n'ayant pas réagi, et un polyuréthane hybride comprenant une terminaison isocyanate et une terminaison silane issu de la réaction du silane MTMO avec une fonction NCO du polyuréthane de l'exemple 1. Les suivis par IR ont permis de montrer que l'ensemble du silane a été consommé.

Ensuite, le polyuréthane hybride obtenu est ensuite ajouté à un mélange contenant de nouveau du polyuréthane de l'exemple 1, de l'Omya BL, de la poudre de PVC et du dioxyde de titane. Le milieu réactionnel a été mélangé pendant 10 min à 23°C. Puis, l'IPDI a été ajouté avant de mélanger le tout sous vide (-0,9 bars) pendant 15 minutes. Ensuite, la bis-urée de l'exemple 2 a été ajoutée sous vide (-0.9 bars) et le milieu réactionnel mélangé pendant 10 minutes sous vide toujours, avant l'ajout des autres ingrédients.

Le mélange a été agité sous vide (-0,9 bars) pendant 10 à 20 minutes.

Dans la formulation C4, le ratio massique polyuréthane de l'exemple 1 : polyuréthane hybride de la 1^{ère} étape est supérieur à 94 : 6.

| **Ingrédients** | **1^{ère} étape** : **synthèse du prépolymère hybride** |
|---|---|
| Polyuréthane de l'exemple 1 | 99,64 |
| Dynasilan MTMO | 0,36 |
| **Total** | **100** |
| | |

| | **2^{ème} étape : préparation de la composition C4** |
|---|---|
| | **Composition C4** |
| Polyuréthane de l'exemple 1 | 21,05 |
| Prépolymère hybride de l'étape 1 | *10,04* |
| DINCH | *5*,*71* |
| | |
| Omya BL | *25*,*68* |
| Poudre de PVC | *9*,*36* |
| TiO₂ | *4*,*28* |
| IPDI | *0*,*11* |
| Bis-urée de l'exemple 2 | *20,79* |
| Incozol BH | *1*,*94* |
| Silane A187 | *0,09* |
| Desmodur L75 | *0,46* |
| Catex E70 | *0,03* |
| Sol 10% acide salicylique | *0,46* |
| **total** | ***100*** |

*Les ingrédients du tableau sont indiqués en % en poids par rapport au poids total de la composition.*

### Exemple 8 : propriétés de la composition C4

Les résultats sont indiqués dans le tableau suivant :

| | **Composition C4** |
|---|---|
| Temps de formation de peau (en min) | 80 |
| Vitesse d'extrusion (en g/min) | 104 |
| Reprise élastique (en %) (ISO 7389 - conditionnement A) | 85 |

La composition C4 conduit avantageusement à un joint adhésif présentant après réticulation de bonnes performances mécaniques dont une reprise élastique supérieure ou égale à 70%.

### Exemple 9 : préparation d'une composition C5

La composition suivante a été préparée selon le mode opératoire suivant :
Dans un réacteur, le DINCH et le polyuréthane de l'exemple 1 ont été ajoutés et mélangés pendant 30 minutes à 23°C. Le MTMO a été ajouté, et le mélange réactionnel agité pendant 15 minutes à 23°C, de sorte à former un mélange comprenant le DINCH, le polyuréthane de l'exemple 1 n'ayant pas réagi, et un polyuréthane hybride comprenant une terminaison isocyanate et une terminaison silane issu de la réaction du MTMO avec une fonction NCO du polyuréthane de l'exemple 1. Les suivis par IR ont permis de montrer que l'ensemble du MTMO a été consommé. Le ratio massique polyuréthane de l'exemple 1 : polyuréthane terminé isocyanate et terminé silane est supérieur à 94 : 6. Le polyuréthane hybride est synthétisé in situ et pas isolé dans le cas présent.

L'Omya BL, la poudre de PVC et le dioxyde de titane ont ensuite été ajoutés au mélange réactionnel puis mélangés pendant 10 min. Puis, l'IPDI a été ajouté avant de mélanger le tout sous vide (-0,8 bars) pendant 10 minutes, avant l'ajout des autres ingrédients.

Le mélange a été agité sous vide (-0,8 bars) pendant 10 à 20 minutes.

| **Ingrédients** | **Composition C5** |
|---|---|
| DINCH | *35*,*62* |
| Polyuréthane de l'exemple 1 | 9,97 |
| Dynasylan^{®}MTMO | *0,05* |
| | |
| Omya BL | 30,43 |
| Poudre de PVC | 13,70 |
| pigments | 1,4 |
| TiO₂ | 2,74 |
| IPDI | *0,13* |
| DINCH | 2,39 |
| Incozol BH | 2,47 |
| Silane A187 | *0*,*1* |
| Desmodur L75 | *0,52* |
| Catex E70 | *0,06* |
| Sol 10% acide salicylique | *0,42* |
| **total** | ***100*** |

*Les ingrédients du tableau sont indiqués en % en poids par rapport au poids total de la composition.*

### Exemple 10 : propriétés de la composition C5

Le protocole et les tests identiques à ceux réalisés pour la composition C1 ont été faits.

Les résultats sont indiqués dans le tableau suivant :

| | **Composition C5** |
|---|---|
| Temps de formation de peau (en min) | 85 |
| Vitesse d'extrusion (en g/min) | 167 |
| Reprise élastique (en %) (ISO 7389 - conditionnement A) | 91 |

La composition C5 conduit avantageusement à un joint adhésif présentant après réticulation de bonnes performances mécaniques dont une reprise élastique supérieure ou égale à 70%.

## Revendications

1. Composition réticulable à l'humidité comprenant :
∘ un polyuréthane P1 comprenant au moins deux groupes isocyanate ;
∘ un polyuréthane P2 comprenant au moins un groupe isocyanate et un groupe ayant la formule (I) suivante :
[Chem 14]
-N(H)-C(=O)-X-R¹-Si(R²)ₚ(OR³)₃₋ₚ (I)
dans laquelle :
- X représente S ou NR⁴, R⁴ représentant H, un groupe alkyle, un groupe aryle, ou un groupe cycloalkyle ;
- R¹ représente un groupe hydrocarboné divalent comprenant de 1 à 12 atomes de carbone ;
- p est un nombre entier égal à 0, 1 ou 2, de préférence 0 ou 1 ;
- chaque R², identique ou différent, représente un groupe alkyle linéaire ou ramifié comprenant de 1 à 4 atomes de carbone ;
- chaque R³, identique ou différent, représente un groupe alkyle linéaire ou ramifié comprenant de 1 à 4 atomes de carbone ;
ladite composition étant **caractérisée en ce que** le ratio massique polyuréthane P1 : polyuréthane P2 va de 50 : 50 à 99 : 1, de préférence de 70 : 30 à 99 : 1, encore plus préférentiellement de 80 : 20 à 99 : 1.

2. Composition selon la revendication 1, **caractérisée en ce que** le polyuréthane P1 est obtenu par un procédé comprenant une étape E1 de réaction de polyaddition :
i) d'une composition comprenant un polyéther diol et un polyéther triol ;
ii) d'une composition comprenant un diisocyanate choisi parmi le toluène diisocyanate, le diphénylméthane diisocyanate, l'isophorone diisocyanate, le xylylène-diisocyanate.

3. Composition selon l'une quelconque des revendications 1 ou 2, **caractérisée en ce que** le polyuréthane P1 a une teneur en groupes NCO allant de 0,5% à 10%, plus préférentiellement de 1% à 8%.

4. Composition selon l'une quelconque des revendications 1 à 3, **caractérisée en ce qu'**elle comprend de 5% à 60% en poids de polyuréthane P1, de préférence de 10% à 50% en poids par rapport au poids total de ladite composition.

5. Composition selon l'une quelconque des revendications 1 à 4, **caractérisée en ce que** le polyuréthane P2 comprend un groupe isocyanate terminal et un groupe terminal ayant la formule (I) :
[Chem 15]
-N(H)-C(=O)-X-R¹-Si(R²)ₚ(OR³)₃₋ₚ (I).

6. Composition selon l'une quelconque des revendications 1 à 5, **caractérisée en ce que** le polyuréthane P2 comprend un groupe de formule (I) dans laquelle :
- X représente S ; et/ou
- R¹ représente un alkylène linéaire ou ramifié comprenant de 1 à 6 atomes de carbone ; et/ou
- p représente 0 ; et/ou
- R³, identique ou différent, représente méthyle ou éthyle.

7. Composition selon l'une quelconque des revendications 1 à 6, **caractérisée en ce que** le polyuréthane P2 comprend un groupe de formule (I) dans laquelle :
- X représente S ; et
- R¹ représente un alkylène linéaire ou ramifié comprenant de 1 à 6 atomes de carbone ; et
- p représente 0 ; et
- R³, identique ou différent, représente méthyle ou éthyle.

8. Composition selon l'une quelconque des revendications 1 à 7, **caractérisée en ce que** le polyuréthane P2 est obtenu par un procédé comprenant une étape E2 de réaction d'une composition comprenant un polyuréthane P1 avec au moins un organosilane de formule (II) suivante :
[Chem 16]
H-X-R¹-Si(R²)ₚ(OR³)₃₋ₚ (II)
dans des quantités telles que le rapport molaire NCO/XH (r2) va de 70 à 200, de préférence de 90 à 140.

9. Composition selon l'une quelconque des revendications 1 à 8, **caractérisée en ce qu'**elle comprend le polyuréthane P2 dans une teneur inférieure ou égale à 4 % par rapport au poids total de ladite composition, de préférence inférieure ou égale à 3% en poids.

10. Composition selon l'une quelconque des revendications 1 à 9, **caractérisée en ce que** le polyuréthane P2 a une masse moléculaire moyenne en poids (Mw) allant de 5 000 g/mol à 100 000 g/mol, de préférence de 8 000 g/mol à 60 000 g/mol, et encore plus préférentiellement de 10 000 g/mol à 40 000 g/mol.

11. Composition selon l'une quelconque des revendications 1 à 10, **caractérisée en ce qu'**elle comprend au moins un agent de rhéologie.

12. Composition selon l'une quelconque des revendications 1 à 11, **caractérisée en ce qu'**elle comprend entre 1 % et 45 % en poids d'agent de rhéologie par rapport au poids total de ladite composition, de préférence encore entre 5 % et 40 % en poids, et plus préférentiellement entre 10 % et 35 % en poids.

13. Composition selon l'une quelconque des revendications 11 ou 12, **caractérisée en ce que** l'agent de rhéologie est un agent thixotropique choisi parmi les cires d'amides, les suspensions dans un plastifiant de bis-urée issue de la réaction d'un diisocyanate avec une amine aliphatique primaire, et leurs mélanges.

14. Composition selon la revendication 13, **caractérisée en ce que** la suspension de bis-urée dans un plastifiant est constituée de :
- de 1 % à 40 % en poids d'une bis-urée obtenue par réaction d'une amine aliphatique primaire avec un diisocyanate de masse molaire inférieure à 500 g/mol, par rapport au poids total de ladite suspension, et
- de 60 % à 99% en poids d'un plastifiant choisi parmi les alkylphtalates, le tétravalérate de pentaérythritol, les esters d'acide alkylsulphonique et de phénol, le diisononyl-1,2-cyclohexane dicarboxylate, le 3,3'-[méthylènebis(oxyméthylène)]bis[heptane], le dioctyl carbonate et leurs mélanges, par rapport au poids total de ladite suspension,
ladite suspension se présentant sous la forme d'une suspension de particules solides de la bis-urée dans une phase continue de plastifiant.

15. Composition selon l'une quelconque des revendications 1 à 14, **caractérisée en ce qu'**elle comprend de 5% à 60% en poids du mélange de polyuréthanes P1 et P2 par rapport au poids total de ladite composition.

16. Composition selon l'une quelconque des revendications 1 à 15, **caractérisée en ce qu'**elle comprend de 5% à 50% en poids de charge(s), préférentiellement de 5% à 40% en poids par rapport au poids total de ladite composition.

17. Composition selon l'une quelconque des revendications 1 à 16, **caractérisée en ce qu'**elle comprend au moins une charge carbonatée et une charge de PVC.

18. Composition selon l'une quelconque des revendications 1 à 17, **caractérisée en ce qu'**elle ne comprend pas d'aminosilane.

19. Utilisation de la composition selon l'une quelconque des revendications 1 à 18, comme adhésif, notamment comme adhésif semi-structural, comme mastic ou comme revêtement.

20. Procédé d'assemblage de substrats comprenant:
- l'enduction, sur au moins une surface des substrats à assembler, de la composition telle que définie dans l'une quelconque des revendications 1 à 19, puis
- la mise en contact des substrats.
